# EUROPÄISCHE PATENTSCHRIFT

(11) **EP 1 150 153 B1**
(45) Veröffentlichungstag und Bekanntmachung des Hinweises auf die Patenterteilung: **15.06.2011**
(21) Anmeldenummer: 00108759.2
(22) Anmeldetag: 25.04.2000
(51) Int. Cl.: G02B 21/00

(54) **Mikroskop**
Microscope
Microscope

(43) Veröffentlichungstag der Anmeldung: 31.10.2001
(73) Patentinhaber: Leica Microsystems CMS GmbH, 35578 Wetzlar (DE)
(72) Erfinder: Engelhardt, Johann, Dr., 76669 Bad Schönborn (DE); Bradl, Joachim, Dr., 69198 Schriesheim (DE)
(74) Vertreter: Maisch, Thomas

(56) Entgegenhaltungen:
- EP-A- 0 491 289
- DE-A- 19 629 725
- US-A- 5 241 364

## Beschreibung

Die Erfindung betrifft ein Mikroskop, vorzugsweise konfokales Laserscanmikroskop, mit mindestens einer Lichtquelle, mindestens einem Detektor und zwei Objektiven, wobei beidseits der Objektebene je eines der Objektive angeordnet ist und die Objektive gegeneinander gerichtet sind und einen gemeinsamen Fokus haben und wobei im Beleuchtungs/Detektionsstrahlengang mindestens ein Strahlteiler zur Aufteilung des Beleuchtungslichts auf die Objektive und ein Strahlvereiniger zur Zusammenführung des von den Objektiven kommenden Detektionslichts vorgesehen ist.

Mikroskope der gattungsbildenden Art, insbesondere Mikroskope, bei denen zwei gegeneinander gerichtete Objektive mit gemeinsamem Fokus in der Bildebene vorgesehen sind, sind seit geraumer Zeit aus der Praxis bekannt. Lediglich beispielhaft wird dazu auf die EP 0 491 289 B1 verwiesen. Aus dieser Druckschrift ist ein doppelkonfokales Rastermikroskop mit den gattungsbildenden Merkmalen bekannt. Eine nicht polarisierende Strahlteilervorrichtungist zur Aufspaltung des beleuchtenden Lichts in kohärente Anteile vorgesehen. Die Strahlteilervorrichtung dient zur Beleuchtung der gegeneinander gerichteten Objektive und zum Zusammenführen von zueinander kohärenten Lichtstrahlen von den gegeneinander gerichteten Objektiven. Das bekannte Mikroskop hat den Vorteil, dass mit den dort realisierten optischen Bauteilen eine hohe Auflösung realisierbar ist. Bei dem bekannten Mikroskop handelt es sich um ein sogenanntes "High-End"-Mikroskop, bei dem ein interferometrischer Strahlengang realisiert ist. Ein herkömmliches Mikroskop ist in der Konstruktion aufwändig und daher im Vergleich zu herkömmlichen Mikroskopen teuer. Außerdem umfasst das bekannte Mikroskop besondere Aufbauten, die auf optischen Bänken einen ganz erheblichen Raumbedarf haben. Entsprechend ist das Mikroskop anfällig im Hinblick auf äußere Einflüsse.

Die DE 196 29 725 A zeigt für sich gesehen ein Doppelobjektiv-System, welches zum Einbau in ein herkömmliches Mikroskop geeignet ist. Diese Eignung resultiert daraus, dass das Doppeloblektiv-System wie auch das herkömmliche Objektiv gleichermaßen funktionieren.

Der vorliegenden Erfindung liegt nun die Aufgabe zugrunde, die aus dem Stand der Technik bekannte höchstauflösende Mikroskoptechnik bei herkömmlichen Mikroskopen realisieren zu können, insbesondere durch Nachrüsten.

Die voranstehende Aufgabe wird durch die Merkmale des Patentanspruches 1 gelöst. Danach ist ein gattungsbildendes Mikroskop dadurch gekennzeichnet, dass die Objektive und der Strahlteiler/Strahlvereinlger zu einer modularen Baugruppe in einem Gehäuse zusammengefasst sind, dass die Baugruppe bzw. das Gehäuse eine Schnittstelle zum Ankoppeln an den Beleuchtungs-/Detektionsstrahlengang des Mikroskops aufweist und dass die Baugruppe einen zwischen den Objektiven in dem Gehäuse angeordneten Objekttisch umfasst.

Zunächst einmal ist wesentlich, dass mit der gewählten Merkmalskombination eine in sich geschlossene modulare Baugruppe geschaffen ist, die neben den beiden Objektiven und dem Strahlvereiniger auch einen zwischen den Objektiven angeordneten Objektivtisch umfasst.

In erfindungsgemäßer Weise sind daher die Objektive und der Strahlteiler/Strahlvereiniger zu einer modularen Baugruppe in einem Gehäuse zusammengefasst. Diese Baugruppe weist eine Schnittstelle zum Ankoppeln an den Beleuchtungs/Detektionsstrahlengang des Mikroskops auf. Die modulare Baugruppe ist - für sich gesehen - in dem Gehäuse und somit mit dem Gehäuse unabhängig handhabbar und kann mit ihrer Schnittstelle an das Mikroskop angekoppelt werden, wobei eine Ankopplung an den Beleuchtungs-/Detektionsetrahlengang des Mikroskops unabdingbar ist.

In vorteilhafter Weise lässt sich die Baugruppe mit ihrer Schnittstelle an Stelle eines herkömmlichen Objektivs bzw. Objektivrevolvers in das Mikroskopstativ einbringen und dabei in das Mikroskop - in dessen Beleuchtungs-/Detektionsstrahlengang - ankoppeln. Insoweit ist eine Umrüstung auf einfache Weise möglich, nämlich nach Entnahme des Objektivs bzw. des Objektivrevolvers, wodurch ein Ankoppeln der hier in Rede stehenden High-End-Baugruppe möglich ist.

Im Hinblick auf eine konkrete Ausgestaltung der die optischen Bauteile umfassenden Baugruppe sind die Bauteile der Baugruppe auf einer Grundplatte montiert. Zur Vermeidung einer temperaturabhängigen Veränderung des Strahlengangs ist es von besonderem Vorteil, wenn die Grundplatte aus einem Material mit geringem Wärmeausdehnungskoeffizienten gefertigt ist. Insoweit kommen Materialien wie invar® oder Supralnvar in Frage. Diese Werkstoffe haben im Verlauf der hier auftretenden Temperaturen nahezu keine thermische Ausdehnung, so dass eine temperaturbedingte Veränderung des Strahlengangs bzw. eine entsprechende Dejustage nahezu ausgeschlossen ist.

Im Hinblick auf eine besonders sichere Positionierung der optischen Baugruppe ist es von weiterem Vorteil, wenn die optischen Bauteile der Baugruppe - vorzugsweise auf der Grundplatte angeordnet - in einem Gehäuse angeordnet sind. Zur Vermeidung äußerer Einflüsse könnte das Gehäuse hermetisch abgedichtet sein. Auch eine thermische Isolation ist von Vorteil, um nämlich äußere Temperatureinflüsse auf den Justagezustand wirksam zu vermeiden.

Zur wirksamen Vermeidung einer Dejustage könnte man innerhalb des Gehäuses eine definierte Temperatur vorgeben, in deren Bereich der Strahlengang justiert ist. Zum Erhalt dieser Temperatur könnte die optische Baugruppe ein Bauteil mit definierter, zumindest weitgehend konstanter Wärmeabgabe umfassen. Das wärmeabgebende Bauteil müsste derart dimensioniert sein, dass es geeignet ist, die Baugruppe auf einer konstanten Betriebstemperatur zu halten, und zwar unter Berücksichtigung der dort möglicherweise realisierten thermischen Isolation. Bei dem wärmeabgebenden Bauteil könnte es sich um eine Laserlichtquelle, vorzugsweise um einen Diodenlaser, handeln.

Eine weitere Möglichkeit zur Vermeidung einer Dejustage aufgrund thermischer Ausdehnungen liegt darin, dass die optischen Bauteile der Baugruppe derart konstruiert und auf der Grundplatte - gegebenenfalls mittels besonderer Halter - montiert und angeordnet sind, dass sich temperaturbedingte Ausdehnungen gegenseltig kompensieren und daher keinen Einfluss auf den optischen Justierzustand der Baugruppe haben. Dies lässt sich ganz besonders dann realisieren, wenn einzelne Bauteile derart konstruiert sind, dass sie ausschließlich eine lineare Ausdehnung, d.h. eine Ausdehnung in einer Richtung, aufweisen. Durch entsprechende endseitige Halterungen und einander entgegengerichtete Ausdehnungen kann eine gegenseitige Kompensation im Temperaturverlauf stattfinden, ohne dass sich der Strahlengang verändert. Auch durch diese Maßnahme ist eine Dejustage zumindest weitgehend vermieden.

Die optische Baugruppe weist neben den beiden einander entgegengerichteten Objektiven und dem Strahlteiler/Strahlvereiniger ein weiteres optisches Bauteil auf. Das weitere Bauteil ist der Objekttisch, der zwischen den Objektiven angeordnet ist. Bei an das Mikroskop angekoppelter Baugruppe bzw. bei angekoppeltem Gehäuse ist der Objekttisch horizontal ausgerichtet, so dass die zu untersuchenden Objekte in konventioneller Weise auf den Tisch auflegbar sind.

Des Weiteren ist es von Vorteil, wenn der Objekttisch von außen des Gehäuses zugänglich ist. Insoweit lässt sich der Objekttisch von außerhalb bedienen, insbesondere mit der zu untersuchenden Probe bestücken, ohne dass dazu ein Öffnen des Gehäuses erforderlich ist. Im Rahmen einer solchen Anordnung ist der Objekttisch und das darauf liegende Objekt durch das Gehäuse geschützt.

Der Objekttisch könnte nicht nur von außerhalb des Gehäuses mit einem Objekt belegt werden, sondern auch von außerhalb des Gehäuses einstellbar bzw. verstellbar sein. Dazu könnte der Objekttisch motorangetrieben sein, wobei zur Betätigung des Objekttisches ein Betätigungsorgan, vorzugsweise in Form eines Joysticks oder Trackballs, vorgesehen sein kann.

Die die optischen Bauteile enthaltende Baugruppe könnte des Weiteren eine Optik zur Verlagerung der Pupille der in der Baugruppe verwendeten Objektive umfassen. Dadurch ist eine Anpassung an den durch die Baugruppe nunmehr erweiterten Strahlengang möglich. Die Optik zur Verlagerung der Pupille könnte durch eine virtuelle Abbildung oder durch eine reelle Zwischenabbildung realisiert sein. Im Konkreten könnte die Verlagerung der Pupille durch eine im Beleuchtungs-/Detektionsstrahlengang nahe der Einkopplungsstelle angeordnete Optik realisiert sein. Ebenso ist es denkbar, dass die Verlagerung der Pupille durch den Austausch der Tubuslinse des Mikroskops realisiert ist. Wesentlich ist insoweit, dass eine Verlagerung der Pupille zur Anpassung nach Einbringung der Baugruppe in das Mikroskopstativ an Stelle des Objektivrevolvers möglich ist, nämlich eine Anpassung der Lage der Pupille der Objektive, da die Objektive in der Baugruppe, beispielsweise in einem Interferometermodul, weiter vom Mikroskopstativ entfernt sind als das im konventionellen Betriebsmodus mit Objektivrevolver der Fall ist. Ein Austausch der Tubuslinse, die auf einem geeigneten Linsenrad angeordnet sein könnte, ist grundsätzlich denkbar.

Die Baugruppe könnte des Weiteren einen im Beleuchtungs-/Detektionsstrahlengang angeordneten Spiegel zur Umlenkung des Beleuchtungs-/Detektionsstrahlengangs umfassen. Durch Verwendung eines solchen Spiegels und durch die damit erreichte Umlenkung des Strahlengangs lässt sich eine kompakte Bauweise der Baugruppe realisieren.

Zwischen der Einkopplungsstelle und dem Strahlteiler, vorzugsweise zwischen der Einkopplungsstelle und dem voranstehend genannten Spiegel, könnte im Beleuchtungs-/Detektionsstrahlengang ein Shutter angeordnet sein, nämlich zum Ausblenden des Strahls oder zumindest eines Teilstrahls.

Unmittelbar den beiden Objektiven vorgeordnet könnte dann ebenfalls wieder ein Spiegel zur Umlenkung des Beleuchtungs-/Detektionslichts vorgesehen sein. Diese beiden Spiegel dienen ebenfalls zur Realisierung einer kompakten Bauweise der gesamten Baugruppe, wodurch sich die Größe des erforderlichen Gehäuses reduzieren lässt. Im Beleuchtungs/Detektionsstrahlengang zwischen dem Strahlteiler und dem Spiegel kann dann wiederum ein Shutter vorgesehen sein, der ebenfalls zum Ausblenden bzw. Teilausblenden des Lichtstrahls dient, und zwar je nach den Erfordernissen der konkreten Anwendung.

Des Weiteren ist es denkbar, dass die Baugruppe optische Bauteile zur Beeinflussung von Interferenzerscheinungen, insbesondere zum Phasenabgleich, umfasst, nämlich um einen interferometrischen Strahlengang zu realisieren. Dazu könnten ganz besondere Interferometer integriert sein, so beispielsweise Sagnac-, Michelson-, Twyman-Green- oder Mach-Zehnder-Interferometer, die sich zur Bildung eines interferometrischen Strahlengangs ganz besonders eignen. Des Weiteren könnte die Baugruppe optische Bauteile zum Betrieb der 4Pi-, SWFM-, I²M-, I³M-, I⁵M-Mikroskoptechnologie umfassen, wobei es sich dabei um eine äußerst komplizierte "High-End"-Mikroskoptechnologie unter Verwendung unterschiedlichster Mikroskopmethoden handelt. Für all diese Methoden ist wesentlich, dass mit gegeneinander gerichteten Objektiven gearbeitet wird.

In weiter vorteilhafter Weise lassen sich die wesentlichen optischen Bauteile der Baugruppe zwecks Justage positionieren, nämlich durch den Bauteilen zugeordnete Aktoren. Diese Aktoren könnten über Steuereinheiten ansteuerbar sein, wobei die Steuereinheiten außerhalb der Baugruppe oder innerhalb der Baugruppe - in diese integriert - vorgesehen sein können. In besonders vorteilhafter Weise sind die Aktoren rechnergesteuert, so dass sich eine Justage mittels geeignetem Rechnerprogramm durchführen lässt. Eine entsprechende Benutzerführung - zur Justage - ist denkbar.

Des Weiteren könnten verschiedene Kenngrößen des Betriebszustandes der Baugruppe mittels Detektoren detektierbar sein, wobei die Detektoren integrale Bestandteile der Baugruppe sind. Dabei kann es sich um mechanische, elektronische und/oder optische Sensoren handeln, die sich zur Detektion der jeweiligen Kenngrößen - zur Ermittlung des Betriebszustandes der Baugruppe - besonders eignen. Hierdurch ist eine automatisierte Justage des Systems bzw. des Moduls möglich.

Wie bereits zuvor erwähnt, könnte die Baugruppe eine eigene Lichtquelle umfassen, wobei diese Lichtquelle gleichzeitig zur Temperierung der Baugruppe dienen kann. Diese Lichtquelle könnte darüber hinaus zur Generierung eines Hilfsstrahlengangs zur Justage der Bauteile dienen. Der Hilfsstrahlengang könnte dabei als interferometrischer Strahlengang generiert sein, wobei die Lichtquelle Integraler Bestandteil der Baugruppe ist. Ebenso ist es denkbar, die Lichtquelle als externe Lichtquelle in die Baugruppe einzukoppeln, wobei dabei jede beliebige Lichtquelle - ungeachtet deren Größe - in Frage kommt. Die Einkopplung mittels Lichtleitfaser ist denkbar.

Die Lichtquelle könnte als Festkörper-, Dioden- oder Gaslaser ausgeführt sein.

Schließlich sei angemerkt, dass die Baugruppe eine Fluoreszenz-Auflicht-Einheit, einen Binokular-Tubus und/oder eine Schnittstelle zu einer konfokalen Einheit umfassen könnte. Weitere Ausgestaltungen unter Nutzung herkömmlicher Mikroskoptechniken sind denkbar.

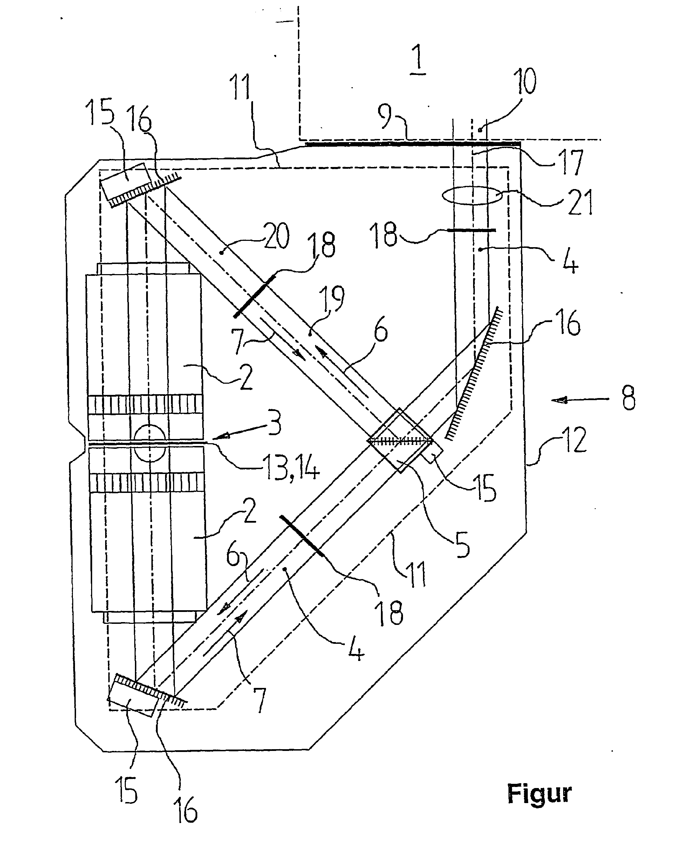

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige Figur in einer schematischen Darstellung den prinzipiellen Aufbau der die optischen Bauteile enthaltenden optischen Baugruppe, die aufgrund ihrer modularen Bauweise an das lediglich angedeutete Mikroskop - nachträglich - ankoppelbar ist.

In der schematischen Darstellung der Figur ist der das herkömmliche Mikroskop 1 betreffende Bereich lediglich angedeutet. Dabei handelt es sich bei dem hier dargestellten Ausführungsbeispiel um ein konfokales Laserscanmikroskop. Dieses Laserscanmikroskop umfasst eine in der Figur nicht gezeigte Lichtquelle, einen ebenfalls in der Figur nicht gezeigten Detektor und mindestens zwei Objektive 2, wobei beidseits der Objektebene 3 je eines der Objektive 2 angeordnet ist. Die beiden Objektive 2 sind gegeneinander gerichtet und haben einen gemeinsamen Fokus.

Die Figur zeigt des Weiteren, dass im Beleuchtungs-/Detektionsstrahlengang 4 mindestens ein Strahlteiler 5 zur Aufteilung des Beleuchtungslichts 6 auf die Objektive 2 und ein Strahlvereiniger 5 zur Zusammenführung des von den Objektiven 2 kommenden Detektionslichts 7 vorgesehen ist. Dabei sei angemerkt, dass es sich bei dem Strahlteiler und Strahlvereiniger 5 um ein einziges optisches Bauteil handeln kann, wie dies in der Figur gezeigt ist.

Erfindungsgemäß sind die Objektive 2 und der Strahlteiler/Strahlvereiniger 5 zu einer modularen Baugruppe 8 zusammengefasst, wobei die Baugruppe 8 eine Schnittstelle 9 zum Ankoppeln an den Beleuchtungs/Detektionsstrahlengang 10 des Mikroskops 1 aufweist.

Bei dem erfindungsgemäßen Mikroskop 1 ist der relativ komplizierte Teil des Interferenzmikroskops, d.h. die die entsprechenden optischen Bauteile enthaltende Baugruppe, modular ausgebildet, so dass die modulare Baugruppe 8 grundsätzlich an ein konventionelles Mikroskop ankoppelbar ist. Somit lässt sich ein im Allgemeinen teures Forschungsmikroskop nicht nur für konventionelle Betriebsmodi verwenden, sondern auch für den höchstauflösenden Mikroskopbetrieb, nämlich durch Modifikation mittels der ankoppelbaren modularen Baugruppe. Insoweit lassen sich konventionelle Baugruppen eines Mikroskops auch für den höchstauflösenden Mikroskop-Modulbetrieb verwenden. So könnte die Beleuchtung mit einer dem Mikroskop bereits zugeordneten Hochdruckdampf-Lichtquelle realisiert werden. Auch ist es denkbar, die Suche des Objekts im konventionellen Fluoreszenz-Auflichtstrahlengang durchzuführen, um danach die Parameter des gesamten Mikroskopsystems für eine Datenaufnahme mit dem höchstauflösenden Modul einstellen zu können. Auch ließe sich der relevante Objektteil des zu untersuchenden Objekts aufnehmen bzw. begrenzen. Die modulare Baugruppe 8 könnte grundsätzlich für alle Mikroskopmethoden Verwendung finden, die zwei gegeneinander gerichtete Mikroskopobjektive nutzen. Dabei handelt es sich insbesondere um die Mikroskoptechnologien 4Pi, SWFM, I²M, I³M, I⁵M. Hinsichtlich dieser Mikroskoptechnologien wird lediglich beispielhaft auf die EP 0 491 289 B1, US-PS 4,621,911 und US-PS 5,671,085 verwiesen. Insbesondere ist es mit diesem Modul möglich, das Objekt entweder mit dem Objektraster - oder mit dem Strahlscanverfahren zwei- bzw. dreidimensional aufzunehmen.

Bei dem in der Figur gezeigten Ausführungsbeispiel eines erfindungsgemäßen Mikroskops bzw. der dort in erfindungswesentlicher Hinsicht relevanten modularen Baugruppe 8 sind die optischen Bauteile auf einer Grundplatte 11 montiert. Diese Grundplatte 11 ist aus einem Material mit geringem Wärmeausdehnungskoeffizienten gefertigt. Im hier vorliegenden Falle handelt es sich bei dem Material der Grundplatte 11 um Suprainvar.

Die modulare Baugruppe 8 bzw. die die optischen Bauteile aufweisende Grundplatte 11 ist in einem Gehäuse 12 angeordnet, wobei das Gehäuse 12 thermisch isoliert ist. Durch Nutzung der sich im Temperaturverlauf unwesentlich ausdehnenden Grundplatte 11 und durch Vorkehrungen des Gehäuses 12 haben begrenzte Temperaturschwankungen im Umfeld des Mikroskops keinen störenden Einfluss auf den justierten Strahlengang der modularen Baugruppe 8 bzw. des dort realisierten Interferometers.

Zur weiteren Elimination des Einflusses von Temperaturschwankungen im Umfeld des Mikroskops ist es von Vorteil, wenn die optischen Bauteile mittels ganz besonderer Halterungen befestigt bzw. positioniert sind und diese wiederum derart konstruiert und auf der Grundplatte 11 befestigt sind, dass sich Materialausdehnung aufgrund von Temperaturschwankungen nahezu vollständig ausgleichen, so dass kein Einfluss auf den optischen Justierzustand der Baugruppe 8 im Temperaturverlauf stattfindet.

Wie bereits zuvor erwähnt, könnte das Gehäuse hermetisch - luftdicht - abgedichtet sein, so dass Luftströmungen im Umfeld des Mikroskops 1 keinen störenden Einfluss auf den Strahlengang des Interferometers haben. Insoweit dürfen innerhalb der Baugruppe 8 keine Bauteile eingebaut und betrieben werden, die als Wärmequelle die Baugruppe 8 unregelmässig stark beheizen, zumal dadurch der interferometrische Strahlengang beeinflusst wird. Allerdings ist es von Vorteil, wenn beispielsweise ein Diodenlaser mit einer definierten, konstanten Wärmeabstrahlung als integraler Bestandteil der Baugruppe 8 vorgesehen ist, da sich dieser zusätzlich temperaturstabilisierend auf die Baugruppe 8 auswirkt. Insoweit könnte die Baugruppe 8 samt dem zu untersuchenden Objekt 13 auf einer insoweit günstigen Betriebstemperatur gehalten werden, so beispielsweise auf 37°C für sogenannte invivo-Objekte.

Die Figur lässt des Weiteren erkennen, dass ein modifizierter Objekttisch 14 vorgesehen ist. Der Objekttisch 14 erstreckt sich zwischen den beiden Objektiven 2 horizontal. Somit ist eine der Bedienungsperson vertraute Benutzungssituation realisiert, wie sie nämlich bei üblichen Mikroskopen gegeben ist. Der Objekttisch 14 ist zur Positionierung relativ zu den Objektiven 2 für den Bediener manuell oder motorisiert von außerhalb bedienbar. Als in der Figur nicht gezeigte Bedienelemente kommt ein Joystick oder ein Trackball in Frage, wodurch eine Motorsteuerung aktivierbar und steuerbar ist.

In der Figur ist des weiteren angedeutet, dass die Baugruppe 8 bzw. die die Baugruppe 8 umfassenden optischen Bauteile - zumindest teilweise - mit Aktoren 15 ausgestattet sind, die zur Beeinflussung des Interferometers dienen. Die Aktoren 15 dienen zur Positionierung des Objekttisches 14 (die zur Betätigung des Objekttisches dienenden Aktoren sind in der Figur nicht gezeigt), der dort vorgesehenen Spiegel 16 und des Strahlteilers/Strahlvereinigers 5 im Beleuchtungs-/Detektionsstrahlengang 4, dessen optische Achse 17 - der Deutlichkeit halber - ebenfalls in der Figur angedeutet ist. Auch eine Betätigung der Objektive 2 ist mittels in der Figur nicht gezeigte Aktoren möglich.

Die Steuereinheiten der Aktoren 15 sind außerhalb der Baugruppe 8 angeordnet, wobei die Ansteuerung der Aktoren 15 rechnergesteuert erfolgt.

Die in der Figur gezeigten Shutter 18 dienen zum Ausblenden des Lichtstrahls 19 oder zumindest eines Teilstrahls 20. Auch diese Shutter 18 sind der modularen Baugruppe 8 zugeordnet.

Bei dem in der einzigen Figur gezeigten konkreten Ausführungsbeispiel handelt es sich um die Kombination eines höchstauflösenden 4Pi-Mikroskop-Moduls (modulare Baugruppe 8) mit einem konventionellen konfokalen Laserscanmikroskop (CLSM). Dabei ist die modulare Baugruppe In dem Gehäuse 12 anstelle des in der Figur nicht gezeigten Objektivrevolvers vorgesehen, wobei die modulare Baugruppe 8 mit Hilfe der kompatiblen Schnittstelle 9 in das Mikroskop 1 eingesetzt bzw. an das Mikroskopstativ angekoppelt ist. Somit ist eine Nutzung des Okulars im konventionellen Mikroskopmodus insbesondere zur Objektfindung bzw. Objekteingrenzung von Vorteil. Mit der hier vorgeschlagenen Anordnung ist es des Weiteren möglich, im konventionellen konfokalen Laserscanmikroskop ein zwei/dreidimensionales Bild aufzunehmen.

Des Weiteren zeigt die Figur schematisch die zur Pupillenverlagerung vorgesehene Optik 21 für die in der Baugruppe 8 verwendeten Objektive 2. Die Einbringung der Baugruppp 8 in das Mikroskopstativ an Stelle des dort sonst vorgesehenen Objektivrevolvers erfordert eine Anpassung der Lage der Pupille der Objektive 2, da diese in dem hier gezeigten Interferometermodul (modulare Baugruppe 8) weiter vom Mikroskopstativ entfernt sind als das im konventionellen Betriebsmodus mit Objektivrevolvern der Fall ist. Eine solche Pupillenverlagerung lässt sich durch eine reelle oder durch eine virtuelle Zwischenabbildung bewerkstelligen. Ebenso ist der Austausch der Tubuslinse möglich, die im Mikroskopstativ auf einem geeigneten Linsenrad angeordnet sein kann, welches in der Figur ebenfalls nicht gezeigt ist. Eine virtuelle Pupillenverlagerung ließe sich dadurch in vorteilhafter Weise durch den Austausch der Tubuslinse realisieren, ohne weiterreichende Maßnahmen ergreifen zu müssen.

Abschließend sei ganz besonders darauf hingewiesen, dass das voranstehend erörterte Ausführungsbeispiel lediglich zur Beschreibung der beanspruchten Lehre dient, diese jedoch nicht auf das rein willkürlich gewählte Ausführungsbeispiel einschränkt.

## Patentansprüche

1. Mikroskop, vorzugsweise konfokales Laserscanmikroskop, mit mindestens einer Lichtquelle, mindestens einem Detektor und zwei Objektiven (2), wobei beidseits der Objektebene (3) je eines der Objektive angeordnet ist und die Objektive (2) gegeneinander gerichtet sind und einen gemeinsamen Fokus haben und wobei im Beleuchtungs-/Detektionsstrahlengang (4) mindestens ein Strahlteiler (5) zur Aufteilung des Beleuchtungslichts (6) auf die Objektive (2) und ein Strahlvereiniger (5) zur Zusammenführung des von den Objektiven (2) kommenden Detektionslichts (7) vorgesehen ist,
**dadurch gekennzeichnet, dass** die Objektive (2) und der Strahlteiler/Strahlvereiniger (5) zu einer modularen Baugruppe (8) in einem Gehäuse (12) zusammengefasst sind, dass die Baugruppe (8) bzw. das Gehäuse (12) eine Schnittstelle (9) zum Ankoppeln an den Beleuchtungs-/Detektionsstrahlengang (4) des Mikroskops (1) aufweist und dass die Baugruppe (8) einen zwischen den Objektiven (2) in dem Gehäuse (13) angeordneten Objekttisch (14) umfasst.

2. Mikroskop nach Anspruch 1, **dadurch gekennzeichnet, dass** die Baugruppe (8) mit ihrer Schnittstelle (9) anstelle eines herkömmlichen Objektivs/Objektivrevolvers in das Mikroskopstativ einbringbar und dabei an das Mikroskop (1) ankoppelbar ist.

3. Mikroskop nach Anspruch 1 oder 2, **dadurch gekennzeichnet, dass** die optischen Bauteile der Baugruppe (8) auf einer Grundplatte (11) montiert sind.

4. Mikroskop nach Anspruch 3, **dadurch gekennzeichnet, dass** die Grundplatte (11) aus einem Material mit geringem Wärmeausdehnungskoeffizienten gefertigt ist.

5. Mikroskop nach Anspruch 4, **dadurch gekennzeichnet, dass** die Grundplatte (11) aus Invar®, vorzugsweise aus Suprainvar, gefertigt ist.

6. Mikroskop nach einem der Ansprüche 1 bis 5, **dadurch gekennzeichnet, dass** das Gehäuse (12) hermetisch abgedichtet ist.

7. Mikroskop nach einem der Ansprüche 1 bis 6, **dadurch gekennzeichnet, dass** das Gehäuse (12) zumindest weitgehend thermisch isoliert ist.

8. Mikroskop nach einem der Ansprüche 1 bis 7, **dadurch gekennzeichnet, dass** die optische Baugruppe (8) ein Bauteil mit definierter, zumindest weitgehend konstanter Wärmeabgabe umfasst.

9. Mikroskop nach Anspruch 8, **dadurch gekennzeichnet, dass** das wärmeabgebende Bauteil derart dimensioniert ist, dass es geeignet ist, die Baugruppe (8) auf einer konstanten Betriebstemperatur zu halten.

10. Mikroskop nach Anspruch 8 oder 9, **dadurch gekennzeichnet, dass** es sich bei dem wärmeabgebenden Bauteil um eine Laserlichtquelle, vorzugsweise um einen Diodenlaser, handelt.

11. Mikroskop nach einem der Ansprüche 1 bis 10, **dadurch gekennzeichnet, dass** die optischen Bauteile der Baugruppe (8) derart konstruiert und auf der Grundplatte (11) - gegebenenfalls mittels besonderer Halter - montiert und angeordnet sind, dass sich temperaturbedingte Ausdehnungen gegenseitig kompensieren und daher keinen Einfluss auf den optischen Justierzustand der Baugruppe (8) haben.

12. Mikroskop nach einem der Ansprüche 1 bis 11, **dadurch gekennzeichnet, dass** der Objekttisch (14) - bei an das Mikroskop (1) angekoppeltem Gehäuse (12) - zwischen den Objektiven (2) horizontal ausgerichtet ist.

13. Mikroskop nach einem der Ansprüche 1 bis 12, **dadurch gekennzeichnet, dass** auf den Objekttisch (14) von außerhalb des Gehäuses (12) zugreifbar ist.

14. Mikroskop nach einem der Ansprüche 1 bis 13, **dadurch gekennzeichnet, dass** der Objekttisch (14) von außerhalb des Gehäuses (12) verstellbar ist.

15. Mikroskop nach einem der Ansprüche 1 bis 14, **dadurch gekennzeichnet, dass** der Objekttisch (14) motorangetrieben ist.

16. Mikroskop nach Anspruch 15, **dadurch gekennzeichnet, dass** zur Betätigung des Objekttisches (14) ein Betätigungsorgan, vorzugsweise in Form eines Joysticks oder Trackballs, vorgesehen ist.

17. Mikroskop nach einem der Ansprüche 1 bis 16, **dadurch gekennzeichnet, dass** die Baugruppe (8) eine Optik (21) zur Verlagerung der Pupille der in der Baugruppe (8) verwendeten Objektive (2) umfasst.

18. Mikroskop nach Anspruch 17, **dadurch gekennzeichnet, dass** die Optik (21) zur Verlagerung der Pupille durch eine virtuelle Abbildung realisiert ist.

19. Mikroskop nach Anspruch 17, **dadurch gekennzeichnet, dass** die Optik (21) zur Verlagerung der Pupille durch eine reelle Zwischenabbildung realisiert ist.

20. Mikroskop nach Anspruch 17, **dadurch gekennzeichnet, dass** die Verlagerung der Pupille durch den Austausch der Tubuslinse des Mikroskops (1) realisiert ist.

21. Mikroskop nach Anspruch 17, **dadurch gekennzeichnet, dass** die Verlagerung der Pupille durch eine im Beleuchtungs-/Detektionsstrahlengang (4) nahe der Einkopplungsstelle angeordnete Optik (21) realisiert ist.

22. Mikroskop nach einem der Ansprüche 1 bis 21, **dadurch gekennzeichnet, dass** die Baugruppe (8) mindestens einen im Beleuchtungs-/Detektionsstrahlengang (4) angeordneten Spiegel (16) zur Umlenkung des Beleuchtungs-/Detektonsstrahlengangs (4) umfasst.

23. Mikroskop nach einem der Ansprüche 1 bis 22, insbesondere nach Anspruch 22, **dadurch gekennzeichnet, dass** zwischen der Einkopplungsstelle und dem Strahlteiler (5), vorzugsweise zwischen der Einkopplungsstelle und dem Spiegel (16), im Beleuchtungs-/Detektionsstrahlengang (4) ein Shutter (18) Angeordnet ist.

24. Mikroskop nach einem der Ansprüche 1 bis 23, **dadurch gekennzeichnet, dass** den Objektiven (2) jeweils ein Spiegel (16) zur Umlenkung des Beleuchtungs-/Detektionslichts (4) vorgeordnet ist.

25. Mikroskop nach Anspruch 24, **dadurch gekennzeichnet, dass** die Baugruppe (8) im Beleuchtungs/Detektionsstrahlengang (4) zwischen dem Strahlteiler (5) und dem Spiegel (16) einen Shutter (18) umfasst.

26. Mikroskop nach einem der Ansprüche 1 bis 25, **dadurch gekennzeichnet, dass** die Baugruppe (8) optische Bauteile zur Beeinflussung von Interferenzerscheinungen, insbesondere zum Phasenabgleich, umfasst.

27. Mikroskop nach Anspruch 26, **dadurch gekennzeichnet, dass** die Baugruppe (8) einen Sagnac-, Michelson-, Twyman-Green- oder Mach-Zehnder-Interferometer zur Bildung eines interferometrischen Strahlengangs umfasst.

28. Mikroskop nach einem der Ansprüche 1 bis 27, **dadurch gekennzeichnet, dass** die Baugruppe (8) optische Bauteile zum Betrieb der 4Pi-, SWFM-, I²M-, I³M-, I⁵M-Mikroskoptechnologie umfasst.

29. Mikroskop nach einem der Ansprüche 1 bis 28, **dadurch gekennzeichnet, dass** zur Positionierung einzelner Bauteile bzw. zur Justage der Baugruppe (8) einzelnen Bauteilen jeweils ein Aktor (15) zugeordnet ist.

30. Mikroskop nach Anspruch 29, **dadurch gekennzeichnet, dass** die Aktoren (15) über Steuereinheiten ansteuerbar sind.

31. Mikroskop nach Anspruch 30, **dadurch gekennzeichnet, dass** die Steuereinheiten außerhalb der Baugruppe (8) vorgesehen sind.

32. Mikroskop nach einem der Ansprüche 29 bis 31, **dadurch gekennzeichnet, dass** die Aktoren (15) rechnergesteuert sind.

33. Mikroskop nach einem der Ansprüche 1 bis 32, **dadurch gekennzeichnet, dass** zur Detektion verschiedener Kenngrößen des Betriebszustandes der Baugruppe (8) Detektoren vorgesehen sind.

34. Mikroskop nach Anspruch 33, **dadurch gekennzeichnet, dass** die Detektoren integrale Bestandteile der Baugruppe (8) sind.

35. Mikroskop nach Anspruch 33 oder 34, **dadurch gekennzeichnet, dass** die Detektoren als mechanische, elektronische und/oder optische Sensoren ausgeführt sind.

36. Mikroskop nach einem der Ansprüche 1 bis 35, **dadurch gekennzeichnet, dass** für die Baugruppe (8) mindestens eine Lichtquelle vorgesehen ist, mit der ein Hilfsstrahlengang zur Justage der Bauteile generierbar ist.

37. Mikroskop nach Anspruch 36, **dadurch gekennzeichnet, dass** der Hilfsstrahlengang als interferometrischer Strahlengang generiert ist und die Justage automatisch erfolgt.

38. Mikroskop nach Anspruch 36 oder 37, **dadurch gekennzeichnet, dass** die Lichtquelle integraler Bestandteil der Baugruppe (8) ist.

39. Mikroskop nach Anspruch 36 oder 37, **dadurch gekennzeichnet, dass** die Lichtquelle als externe Lichtquelle in die Baugruppe (8) einkoppelbar ist.

40. Mikroskop nach einem der Ansprüche 36 bis 39, **dadurch gekennzeichnet, dass** die Lichtquelle als Festkörper-, Dioden- oder Gaslaser ausgeführt ist.

41. Mikroskop nach einem der Ansprüche 1 bis 40, **dadurch gekennzeichnet dass** die Baugruppe eine Fluoreszenz-Auflicht-Einheit, einen Binokular-Tubus und/oder eine Schnittstelle zu einer konfokalen Einheit umfasst.

## Claims

1. Microscope, preferably confocal laser scanning microscope, with at least one light source, at least one detector and two lenses (2), wherein a respective one of the lenses is arranged on either side of the object plane (3) and the lenses (2) are oriented oppositely and have a common focus, and wherein provided in the illumination/detection beam path (4) are at least one beam splitter (5) for splitting the illumination light (6) to the lenses (2) and a beam combining means (5) for bringing together the detection light (7) coming from the lenses (2), **characterised in that** the lenses (2) and the beam splitter / beam combining means (5) are combined into a modular subassembly (8) in a housing (12), that the subassembly (8) or the housing (12) has an interface (9) for coupling to the illumination/detection beam path (4) of the microscope (1) and that the subassembly (8) comprises an object table (14) arranged between the lenses (2) in the housing (13).

2. Microscope according to claim 1, **characterised in that** the subassembly (8) together with its interface (8) can be introduced into the microscope stand instead of a conventional lens /lens-revolver and **in that** case can be coupled to the microscope (1).

3. Microscope according to claim 1 or 2, **characterised in that** the optical components of the subassembly (8) are mounted on a base plate (11).

4. Microscope according to claim 3, **characterised in that** the base plate (11) is made from a material with a low coefficient of thermal expansion.

5. Microscope according to claim 4, **characterised in that** the base plate (11) is made of Invar (Registered Trade Mark), preferably of Suprainvar.

6. Microscope according to any one of claims 1 to 5, **characterised in that** the housing (12) is hermetically sealed.

7. Microscope according to any one of claims 1 to 6, **characterised in that** the housing (12) is at least substantially thermally insulated.

8. Microscope according to any one of claims 1 to 7, **characterised in that** the optical subassembly (8) comprises a component with a defined, at least substantially constant heat output.

9. Microscope according to claim 8, **characterised in that** the exothermal component is so dimensioned that it is suitable for keeping the subassembly (8) at a constant operating temperature.

10. Microscope according to claim 8 or 9, **characterised in that** the exothermal component is a laser light source, preferably a diode laser.

11. Microscope according to any one of claims 1 to 10, **characterised in that** the optical components of the subassembly (8) are so constructed and mounted and arranged on the base plate (11) - optionally by means of separate mounts - that mutual compensation is provided for temperature-induced expansions and these therefore have no influence on the state of optical adjustment of the subassembly (8).

12. Microscope according to any one of claims 1 to 11, **characterised in that** the object table (14) is, when the housing (12) is coupled to the microscope (1), horizontally aligned between the lenses (2).

13. Microscope according to any one of claims 1 to 12, **characterised in that** the object table (14) is accessible from outside the housing (12).

14. Microscope according to any one of claims 1 to 13, **characterised in that** the object table (14) is adjustable from outside the housing (12).

15. Microscope according to any one of claims 1 to 14, **characterised in that** the object table (14) is motor-driven.

16. Microscope according to claim 15, **characterised in that** an actuating element, preferably in the form of a joystick or track-ball, is provided for actuating the object table (14).

17. Microscope according to any one of claims 1 to 16, **characterised in that** the subassembly (8) comprises an optical system (21) for displacing the aperture diaphragms of the lenses (2) used in the subassembly (8).

18. Microscope according to claim 17, **characterised in that** the optical system (21) is realised for displacing the aperture diaphragms by a virtual imaging.

19. Microscope according to claim 17, **characterised in that** the optical system (21) is realised for displacing the aperture diaphragms by a real intermediate imaging.

20. Microscope according to claim 17, **characterised in that** the displacement of the aperture diaphragms is realised by exchange of the tubus lens of the microscope (1).

21. Microscope according to claim 17, **characterised in that** the displacement of the aperture diaphragms is realised by an optical system (21) arranged in the illumination/detection beam path (4) near the coupling-in point.

22. Microscope according to any one of claims 1 to 21, **characterised in that** the subassembly (8) comprises at least one mirror (16), which is arranged in the illumination/detection beam path (4), for deflecting the illumination/detection beam path (4).

23. Microscope according to any one of claims 1 to 22, particularly according to claim 22, **characterised in that** a shutter (18) is arranged between the coupling-in point and the beam splitter (5), particularly between the coupling-in point and the mirror (16), in the illumination/detection beam path (4).

24. Microscope according to any one of claims 1 to 23, **characterised in that** a respective mirror (16) for deflecting the illumination/detection light (4) is arranged upstream of each of the lenses (2).

25. Microscope according to claim 24, **characterised in that** the subassembly (8) comprises a shutter (18) in the illumination/detection beam path (4) between the beam divider (5) and the mirror (160.

26. Microscope according to any one of claims 1 to 25, **characterised in that** the subassembly (8) comprises optical components for influencing interference phenomena, particularly for phasing.

27. Microscope according to claim 26, **characterised in that** the subassembly (8) comprises a Sagnac, Michelson, Twyman-Green or Mach-Zehnder interferometer for formation of an interferometric beam path.

28. Microscope according to any one of claims 1 to 27, **characterised in that** the subassembly (8) comprises optical components for operation of the 4Pi, SWFM, I²M, I³M, I⁵M microscope technology.

29. Microscope according to any one of claims 1 to 28, **characterised in that** a respective actuator (15) for positioning individual components or for adjustment of the subassembly (8) is associated with individual components.

30. Microscope according to claim 29, **characterised in that** the actuators (15) are activatable by way of control units.

31. Microscope according to claim 30, **characterised in that** the control units are provided outside the subassembly (8).

32. Microscope according to any one of claims 29 to 31, **characterised in that** the actuators (15) are computer-controlled.

33. Microscope according to any one of claims 1 to 32, **characterised in that** detectors are provided for detection of different variables of the operating state of the subassembly (8).

34. Microscope according to claim 33, **characterised in that** the detectors are integral components of the subassembly (8).

35. Microscope according to claim 33 or 34, **characterised in that** the detectors are constructed as mechanical, electronic and/or optical sensors.

36. Microscope according to any one of claims 1 to 35, **characterised in that** at least one light source by which an auxiliary beam path for adjustment of the components can be generated is provided for the subassembly (8).

37. Microscope according to claim 36, **characterised in that** the auxiliary beam path is generated as an interferometric beam path and the adjustment is carried out automatically.

38. Microscope according to claim 36 or 37, **characterised in that** the light source is an integral component of the subassembly (8).

39. Microscope according to claim 36 or 37, **characterised in that** the light source can be coupled into the subassembly (8) as an external light source.

40. Microscope according to any one of claims 36 to 39, **characterised in that** the light source is constructed as a solid-body laser, diode laser or gas laser.

41. Microscope according to any one of claims 1 to 40, **characterised in that** the subassembly comprises a fluorescent incident light unit, a binocular tubus and/or an interface with respect to a confocal unit.

## Revendications

1. Microscope, de préférence microscope à balayage laser à foyer commun, comprenant au moins une source de lumière, au moins un détecteur et deux objectifs (2), l'un des objectifs étant disposé à chaque fois des deux côtés du plan de l'objet (3) et les objectifs (2) étant dirigés l'un vers l'autre et ayant un foyer commun et au moins un diviseur de faisceau (5) étant prévu dans la trajectoire du faisceau d'éclairage/de détection (4) pour la répartition de la lumière d'éclairage (6) entre les objectifs (2) et un réunificateur de faisceau (5) étant prévu pour le regroupement de la lumière de détection (7) venant des objectifs (2)
**caractérisé en ce que** les objectifs (2) et le diviseur/réunificateur de faisceau (5) sont regroupés dans un boîtier (12) en un ensemble (8) modulaire, **en ce que** l'ensemble (8) ou le boîtier (12) présente une interface (9) pour le rattachement à la trajectoire du faisceau d'éclairage/de détection (4) du microscope (1) et **en ce que** l'ensemble (8) comprend une platine porte-objet (14) disposée entre les objectifs (2) dans le boîtier (13).

2. Microscope selon la revendication 1, **caractérisé en ce que** l'ensemble (8) peut être introduit avec son interface (9) au lieu d'un objectif/revolver à objectifs classique dans le trépied du microscope et peut être rattaché alors au microscope (1).

3. Microscope selon la revendication 1 ou 2, **caractérisé en ce que** les composants optiques de l'ensemble (8) sont montés sur une plaque de base (11).

4. Microscope selon la revendication 3, **caractérisé en ce que** la plaque de base (11) est fabriquée à base d'un matériau présentant un faible coefficient de dilatation thermique.

5. Microscope selon la revendication 4, **caractérisé en ce que** la plaque de base (11) est fabriquée à base d'Invar^{®}, de préférence à base de Suprainvar.

6. Microscope selon l'une quelconque des revendications 1 à 5, **caractérisé en ce que** le boîtier (12) est étanchéifié de façon hermétique.

7. Microscope selon l'une quelconque des revendications 1 à 6, **caractérisé en ce que** le boîtier (12) est au moins largement isolé thermiquement.

8. Microscope selon l'une quelconque des revendications 1 à 7, **caractérisé en ce que** l'ensemble (8) optique comprend un composant avec dégagement de chaleur défini, au moins largement constant.

9. Microscope selon la revendication 8, **caractérisé en ce que** le composant dégageant de la chaleur est dimensionné de telle sorte qu'il convient pour maintenir l'ensemble (8) à une température de service constante.

10. Microscope selon la revendication 8 ou 9, **caractérisé en ce que**, en ce qui concerne le composant dégageant de la chaleur, il s'agit d'une source de lumière laser, de préférence d'un laser à diode.

11. Microscope selon l'une quelconque des revendications 1 à 10, **caractérisé en ce que** les composants optiques de l'ensemble (8) sont conçus et montés et disposés sur la plaque de base (11) - éventuellement au moyen de supports particuliers - de telle sorte que des dilatations dues à la température se compensent mutuellement et n'ont donc aucune incidence sur l'état d'ajustage optique de l'ensemble (8).

12. Microscope selon l'une quelconque des revendications 1 à 11, **caractérisé en ce que** la platine porte-objet (14) est conçue horizontalement entre les objets (12) - dans le cas du boîtier (12) rattaché au microscope (1).

13. Microscope selon l'une quelconque des revendication 1 à 12, **caractérisé en ce qu'**on peut accéder à la platine porte-objet (14) par l'extérieur du boîtier (12).

14. Microscope selon l'une quelconque des revendications 1 à 13, **caractérisé en ce que** la platine porte-objet (14) peut être réglée à partir du boîtier (12).

15. Microscope selon l'une quelconque des revendications 1 à 14, **caractérisé en ce que** la platine porte-objet (14) est entraînée par moteur.

16. Microscope selon la revendication 15, **caractérisé en ce qu'**un organe de commande est prévu, de préférence sous forme d'un joystick ou d'un trackball, pour l'actionnement de la platine porte-objet (14).

17. Microscope selon l'une quelconque des revendications 1 à 16, **caractérisé en ce que** l'ensemble (8) comprend une optique (21) pour le déplacement de la pupille des objectifs (2) utilisés dans l'ensemble (8).

18. Microscope selon la revendication 17, **caractérisé en ce que** l'optique (21) pour le déplacement de la pupille est réalisée par une représentation virtuelle.

19. Microscope selon la revendication 17, **caractérisé en ce que** l'optique (21) pour le déplacement de la pupille est réalisée par une représentation intermédiaire réelle.

20. Microscope selon la revendication 17, **caractérisé en ce que** le déplacement de la pupille est réalisé par le remplacement de la lentille tubulaire du microscope (1).

21. Microscope selon la revendication 17, **caractérisé en ce que** le déplacement de la pupille est réalisé par une optique (21) disposée dans la trajectoire du faisceau d'éclairage/de détection (4) à proximité du point d'injection.

22. Microscope selon l'une quelconque des revendications 1 à 21, **caractérisé en ce que** l'ensemble (8) comprend au moins un miroir (16) disposé dans la trajectoire de faisceau d'éclairage/de détection (4) pour la déviation de la trajectoire du faisceau d'éclairage/de détection (4).

23. Microscope selon l'une quelconque des revendications 1 à 22, en particulier selon la revendication 2, **caractérisé en ce qu'**un obturateur (18) est disposé entre le point d'injection et le diviseur de faisceau (5), de préférence entre le point d'injection et le miroir (16), dans la trajectoire du faisceau d'éclairage/de détection (4).

24. Microscope selon l'une quelconque des revendications 1 à 23, **caractérisé en ce qu'**à chaque fois un miroir (16) est placé en amont des objectifs (2) pour la déviation de la lumière d'éclairage/de détection (4).

25. Microscope selon la revendication 24, **caractérisé en ce que** l'ensemble (8) comprend un obturateur (18) dans la trajectoire du faisceau d'éclairage/de détection (4) entre le diviseur de faisceau (5) et le miroir (16).

26. Microscope selon l'une quelconque des revendications 1 à 25, **caractérisé en ce que** l'ensemble (8) comprend des composants optiques pour influencer des phénomènes d'interférence, en particulier pour l'ajustement de phase.

27. Microscope selon la revendication 26, **caractérisé en ce que** l'ensemble (8) comprend un interféromètre de Sagnac, de Michelson, de Twymann-Green ou de Mac-Zehnder pour la formation d'une trajectoire de faisceau interférométrique.

28. Microscope selon l'une quelconque des revendication 1 à 27, **caractérisé en ce que** l'ensemble (8) comprend des composants optiques pour le fonctionnement de la technologie du microscope 4Pi, SWFM, I²M, I³M ou I⁶M.

29. Microscope selon l'une quelconque des revendications 1 à 28, **caractérisé en ce qu'**à chaque fois un actionneur (15) est attribué à des composants individuels pour le positionnement de composants individuels ou pour l'ajustage de l'ensemble (8).

30. Microscope selon la revendication 29, **caractérisé en ce que** les actionneurs (15) peuvent être actionnés au moyen d'unités de commande.

31. Microscope selon la revendication 30, **caractérisé en ce que** les unités de commande sont prévues à l'extérieur de l'ensemble (8).

32. Microscope selon l'une quelconque des revendications 29 à 31, **caractérisé en ce que** les actionneurs (15) sont commandés par calculateur.

33. Microscope selon l'une quelconque des revendications 1 à 32, **caractérisé en ce que** des détecteurs sont prévus pour la détection de grandeurs caractéristiques de l'état de service de l'ensemble (8).

34. Microscope selon la revendication 33, **caractérisé en ce que** les détecteurs sont des composants intégrés de l'ensemble (8).

35. Microscope selon la revendication 33 ou 34, **caractérisé en ce que** les détecteurs sont conçus sous forme de capteurs mécaniques, électroniques et/ou optiques.

36. Microscope selon l'une quelconque des revendication 1 à 35, **caractérisé en ce que**, pour l'ensemble (8), il est prévu au moins une source de lumière avec laquelle une trajectoire de faisceau auxiliaire peut être générée pour l'ajustage des composants.

37. Microscope selon la revendication 36, **caractérisé en ce que** la trajectoire de faisceau auxiliaire est générée comme trajectoire de faisceau interférométrique et l'ajustage s'effectue automatiquement.

38. Microscope selon la revendication 36 ou 37, **caractérisé en ce que** la source de lumière est un composant intégré de l'ensemble (8).

39. Microscope selon la revendication 36 ou 37, **caractérisé en ce que** la source de lumière peut être injectée en tant que source de lumière externe dans l'ensemble (8).

40. Microscope selon l'une quelconque des revendications 36 à 39, **caractérisé en ce que** la source de lumière est réalisée sous forme de laser à corps solide, laser à diode ou laser à gaz.

41. Microscope selon l'une quelconque des revendications 1 à 40, **caractérisé en ce que** l'ensemble comprend une unité épifluorescence, un tube binoculaire, et/ou une interface pour former une unité à foyer commun.
